Europäisches Patentamt

European Patent Office

Office européen des brevets

(11) Publication number: **0 463 124 A1**

# EUROPEAN PATENT APPLICATION
## published in accordance with Art. 158(3) EPC

(21) Application number: 90916749.6

(22) Date of filing: 05.11.90

(86) International application number:
**PCT/ES90/00040**

(87) International publication number:
**WO 91/07727 (30.05.91 91/12)**

(51) Int. Cl.5: **G06F 15/72**

(30) Priority: **08.11.89 ES 8903797**

(43) Date of publication of application:
**02.01.92 Bulletin 92/01**

(84) Designated Contracting States:
**AT BE CH DE DK FR GB GR IT LI LU NL SE**

(71) Applicant: **GARCIA BARRIO, Miguel Angel**
**Calle José Zorrilla, 6**
**E-40002 Segovia(ES)**

Applicant: **GONZALEZ MANSINO, José Luis**
**Calle José Zorrilla, 6**
**E-40002 Segovia(ES)**

(72) Inventor: **GARCIA BARRIO, Miguel Angel**
**Calle José Zorrilla, 6**
**E-40002 Segovia(ES)**
Inventor: **GONZALEZ MANSINO, José Luis**
**Calle José Zorrilla, 6**
**E-40002 Segovia(ES)**

(54) **SYSTEM OF COMBINED DIGITAL PHOTOGRAPHIES.**

(57) The system of combined digital photographies is the first system which, by means of a unique and specific unit, allows to combine two or more photographies or shots instantaneously with the desired effect and without any image manipulation during the faking operation, allowing to obtain one or more copies, with real effect, on paper or similar final product (slides, etc,) with a total processing time which, in its fastest application, is lower than 60 seconds.

THE TECHNICAL SECTOR: THE SECTOR OF COMBINED DIGITAL PHOTOGRAPHS was planned and designed with the idea of obtaining new results and applications in the field of photographic activity, by means of special technical methods and systems which are covered in detail below and are the object of this patent application. As an example of its applications, a person can obtain instantaneously, a souvenir photograph, without having to wait or make use of any trick photography process. The person appears, dressed up as a character of another epoch and situated within a suitable surrounding. In order to take such a picture, all one has to do is have the person stand before the camera, as if a regular photograph is going to be taken. A photograph can also be obtained in which one sees a different setting to where one is really situated and the results are very realistic. Other sectors of application would be those in which touched up photographs need to be obtained simply, quickly and economically for their use, verification, presentation etc.

THE STATE OF THE PRIOR ART: The systems which have been used up until now for obtaining touched up photographs, requires their being handled by expert professionals in the subject matter. The complex manipulating involved in trick photography makes their final cost quite high and so their use for simple or domestic purposes, is unthinkable.

In addition, the obtaining of a touched up photograph is thought today to be the result of the application of a series of methods and systems which were originally considered in a non-specific manner, and so, our system can be considered the first of its kind.

If we refer to the afore-mentioned touristic sector, in order to obtain a similar effect, one must use set decorations, curtains in the rear, etc., and, nevertheless, the final result does not reflect a real situation and there is no specific technique for perfecting the final finish instantaneously.

EXPLANATION OF THE INVENTION: THE SYSTEM OF COMBINED DIGITAL PHOTOGRAPHS, consists of an apparatus capable of combining two or more photographs, either already existing ones, or direct, instantaneous shots, at those specific points which are chosen. This result in a single photograph, or a similar end product (a slide, etc.), produced by the mixture of photographs, constitutes the basic purpose of the system. Therefore, the purpose of the system is that of changing the essential meaning of the different aspects employed for obtaining the final result.

FUNCTIONING AND CHARACTERISTICS: The apparatus works basically as if a normal photograph were being taken. The person or object to be photographed is situated in front of the camera lens; the operator chooses one of the photograph design models, which he views on the monitor or on the view-finder. These design models contain empty spaces, into which he will fit what he sees through the lens. The photographer presses the button to digitalize the already combined photograph; and finally, the result is obtained in less than sixty seconds.

The apparatus makes it possible, in turn, to carry out the inverse function, that is, place the photograph - design model, as the background of the combined photograph, in which case, what is being photographed appears in another scene or setting other than the one in which it is found at the moment the photograph is taken.

The apparatus can also be used, for example, when it is a person who must appear in the spaces of the photograph - design model. By using an auxiliary monitor, the individual can see himself and obtain a better placement or position. The apparatus also has a system by which it is possible to diffuse the points at which the two combined images mix automatically, before taking the photograph. In this way, the desired results and quality are obtained.

When we carry out these operations, we can appreciate the chacteristics claimed: the apparatus makes it possible to combine instantaneous photographs in the desired manner without having to manipulate the images with trick photography. In this way, an effect of absolute authenticity can be obtained, if desired, by means of the automatic diffusing system and copies on photographic paper or other similar products (as slides, positives or negatives, etc.) can be obtained in less than one minute's time, in its most rapid application.

A DESCRIPTION OF ONE WAY OF USING THE INVENTION: We are going to cover the steps to be followed in using the apparatus in a specific case: in the touristic sector, by taking a photograph of a young girl dressed up as the famous 15th century queen, Isabel la Católica, sitting on the throne, beside King Fernando. The young girl simply wants to take this photograph with that result.

In order to do so, she need not dress up nor prepare herself in any special way, but merely stand before the camera lens. The operator chooses the photo - design model desired from those found in the digital file unit of the machine. This design model appears in his view-finder or monitor with a space for the Queen's face, through which he will see what he is taking at the time with his lens. By using the zoom and making the necessary movements, he can fit the young girl's face into the space foreseen and then he will proceed to digitalize the composition of the photograph.

Once this composition is digitalized, which is the basic service rendered by the apparatus, one can proceed in different ways. We can view the result slowly, before proceeding to obtain the photograph, which could be repeated with copies, without practically no additional costs. The person who has had the photograph taken can check on its result by means of an additional monitor which can be connected to the machine. It is also possible to carry out a special function of automatic diffusing at the contact points of the touched up photograph in order to obtain greater realism. And finally, the instruction can be given to the apparatus to proceed to take the photograph.

## Claims

1.  THE SYSTEM OF COMBINED DIGITAL PHOTOGRAPHS is characterized by the fact that by means of a single, specific unit, it can combine two or more photographs or images instantaneously and in the desired manner, in order to obtain, as a result, a photograph on paper, or as many copies as are required.

2.  THE SYSTEM OF COMBINED DIGITAL PHOTOGRAPHS is characterized because it provides an original copy, which begins with the combination of photographs or images, with the desired effects in an instantaneous manner.

3.  THE SYSTEM OF COMBINED DIGITAL PHOTOGRAPHS is characterized by the fact that it is the apparatus which makes it possible to obtain, entirely automatically, combined photographs with the desired effects; the photograph is taken, without the need for any special manipulating process.

4.  THE SYSTEM OF COMBINED DIGITAL PHOTOGRAPHS is characterized by the fact that it combines digitalized photographs with shots taken instantaneously, and vice versa, on the spot, and always with the desired effect and no additional manipulating,

5.  THE SYSTEM OF COMBINED DIGITAL PHOTOGRAPHS is characterized by the fact that it carries out a trick photography process, including the obtaining of its final product (a combined photograph with the desired effect). This photograph is entirely finished and printed on paper in less than one minute.

6.  THE SYSTEM OF COMBINED DIGITAL PHOTOGRAPHS is characterized by the fact that it only retouches, automatically, the photograph at the contact points of the combined images, without manipulating of any kind, except for the instruction to do so.

7.  THE SYSTEM OF COMBINED DIGITAL PHOTOGRAPHS is applied in the touristic sector, and makes it possible for people to obtain instantaneous photographs, in which they appear dressed in another manner, surrounded by a different setting, in another place, or in another epoch, by merely standing in front of the camera lens as if a normal photograph were to be taken.

8.  THE SYSTEM OF COMBINED DIGITAL PHOTOGRAPHS is applied in the fields of advertising, graphic arts, etc., in order to obtain instantaneous results with trick photography.

9.  THE SYSTEM OF COMBINED DIGITAL PHOTOGRAPHS is characterized by the fact that it is the apparatus which obtains the instantaneous photographic composition which is exactly desired and without any need for special manipulating of these images.

## Amended claims

1.  THE SYSTEM OF COMBINED DIGITAL PHOTOGRAPHS is characterized by the fact that by means of a single specific unit, it can combine two, three, four or more photographs or images instantaneously and in the desired manner, obtaining as a result a photograph on paper, or as many copies as are required; always with the intended effect, without manipulating the images at the moment they are taken for their combination, with a totally real result that does not show whether the photograph was taken in that place or in that way, or obtained in this manner; and which gives a product, the photograph combined by this system, with its own characteristics in terms of time/result factors, combination possibilities and applications that characterize it exactly.

2.  THE SYSTEM OF COMBINED DIGITAL PHOTOGRAPHS is characterized in accordance with claim 1 because it provides an original copy, which begins with the combination of photographs or images, with the desired effects achieved instantaneously.

3.  THE SYSTEM OF COMBINED DIGITAL PHOTOGRAPHS is characterized by the fact that it is the apparatus which makes it possible to obtain combined photographs with the desired effects and to do this entirely automatically, without the need for any special manipulating process, apart from taking the photograph.

4. THE SYSTEM OF COMBINED DIGITAL PHOTOGRAPHS is characterized in accordance with claim 1 by the fact that it combines digitalized photographs with shots taken at the moment, and vice versa, instantaneously, always with the desired effect and with no additional manipulating.

5. THE SYSTEM OF COMBINED DIGITAL PHOTOGRAPHS is characterized by the fact that it carries out a trick photography process, including the obtaining of its end product (a combined photograph with special effects), fully finished and printed on paper in less than one minute.

6. THE SYSTEM OF COMBINED DIGITAL PHOTOGRAPHS is characterized by the fact that it only retouches, automatically, the photograph at the contact points of the combined images, without any kind of manipulating, except for the instruction to do so.

7. THE SYSTEM OF COMBINED DIGITAL PHOTOGRAPHS is characterized by the fact that, in accordance with claim 1, it is applied in the tourist sector allowing people to obtain instantaneous results, in which they appear dressed in another manner, surrounded by a different setting, in another place or epoch different from reality, by merely standing in front of the camera lens as if a normal photograph were to be taken.

8. THE SYSTEM OF COMBINED DIGITAL PHOTOGRAPHS is applied in accordance with claim 1 in the fields of advertising, graphic arts, etc., in order to obtain instantaneous results with trick photography.

9. THE SYSTEM OF COMBINED DIGITAL PHOTOGRAPHS is characterized by the fact that it is the apparatus which obtains the instantaneous photographic composition that is exactly desired and without any need for special manipulation of these images.

10. THE SYSTEM OF COMBINED DIGITAL PHOTOGRAPHS is characterized by the fact that it obtains as a result a photograph that appears normal, but which has been obtained from the combination of others, or also of others already digitalized, with those taken directly, which allows you to add what you want, previously selected, where you want to be, how you want to dress, which people you want to be next to you and other combinations that can be carried out automatically, instantaneously and without manipulating the images.

11. THE SYSTEM OF COMBINED DIGITAL PHOTOGRAPHS is characterized in accordance with claim 1 by providing a photograph in which the different elements that are combined, as well as the images of people, produce the impression of being in different planes, such as the background, on the one hand; people who are in front of those in disguise, on the other, etc., this photograph always being produced with the characteristics of the other claims.

12. THE SYSTEM OF COMBINED DIGITAL PHOTOGRAPHS is characterized because it achieves as a result an instantaneous photograph that is obtained in a maximum time of 60 seconds and in which the choice is made of place, dress, background, company or other parameters selected in accordance with the application, with a perfect finish and in an automatic manner.

**Brief statement of amendment under article 19(1)**

In conformity with Article 19.1) and Rule 46.4), the following clarifications are made regarding the modifications carried out.
   a) Sheet number 5 is replaced.
   b) Sheet number 6 is replaced.
   c) Sheet number 7 is replaced.
The claims are therefore entirely contained in sheets 5, 6 and 7.
SHEET No 5:
   - CLAIM No 1): MODIFIED.
   - CLAIM No 2): MODIFIED.
   - CLAIM No 3): NOT MODIFIED.
   - CLAIM No 4): MODIFIED.
SHEET No 6:
This starts with the end of claims sheet number 4.
   - CLAIM No 5): NOT MODIFIED.
   - CLAIM No 6): NOT MODIFIED.
   - CLAIM No 7): MODIFIED.
   - CLAIM No 8): MODIFIED.
   - CLAIM No 9): NOT MODIFIED.
   - CLAIM No 10): NEW.
SHEET No 7:
This starts with the end of claim number 10.
   - CLAIM No 11): NEW.
   - CLAIM No 12): NEW.
CLARIFICATIONS:
   * SHEET No 5:
   Claim number 1): This is modified, expanding it with the aim of stating more precisely the specific characteristics of the system and its end product that are claimed.

Claim number 2): This is modified in order to clarify that what is claimed is produced in accordance with claim one.

Claim number 4): This is modified in order to clarify that what is claimed is produced in accordance with claim one.

   * SHEET No 6:

Claim number 7): This is modified in order to clarify that what is claimed is produced in accordance with claim one.

Claim number 8): This is modified in order to clarify that what is claimed is produced in accordance with claim one.

Claim number 10): This is included in order to state more precisely the characteristics proper to the invention as a system and a resulting product, being expressed in this way for greater clarity.

Claim number 11): This is included in order to specifically claim the effect that is achieved in the photograph obtained by the system, and in order to stress the novelty of this kind of photography as well as the appearance that it presents.

Claim number 12): This is included in order to stress the invention's end product.

# INTERNATIONAL SEARCH REPORT

International Application No PCT/ES 90/0040

**I. CLASSIFICATION OF SUBJECT MATTER (if several classification symbols apply, indicate all)** *

According to International Patent Classification (IPC) or to both National Classification and IPC

Int.Cl.$^5$    G 06 F 15/72

**II. FIELDS SEARCHED**

Minimum Documentation Searched [7]

| Classification System | Classification Symbols |
|---|---|
| Int.Cl.$^5$ | G 03 B, G 06 F |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | EP, A, 0243228 (PUBLIGRAFA) 28 October 1987, see abstract; column 2, lines 26-34, 59-62; column 3, lines 9-20, 36-62; column 4, lines 36-48, 54-60 | 1-4,6-9 |
| X | US, A, 4731743 (BLANCATO) 15 March 1988, see abstract | 1-4,7-9 |
| X | US, A, 4539585 (SPACKOVA) 3 September 1985, see abstract | 1-4,7-9 |
| X | EP, A, 0205683 (GIOELLO) 30 December 1986, see abstract | 1-3,7-9 |
| A | FR, A, 2606244 (TOSHIBA) 6 May 1988, see abstract; page 1, lines 1-11 | 1-9 |

* **Special categories of cited documents:** [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 22 January 1991 (22.01.91) | 6 February 1991 (06.02.91) |

| International Searching Authority | Signature of Authorized Officer |
|---|---|
| European Patent Office | |

Form PCT/ISA/210 (second sheet) (January 1985)